Europäisches Patentamt

European Patent Office

Office européen des brevets

(19)

(11) Veröffentlichungsnummer: **0 027 508**
**B1**

(12) # EUROPÄISCHE PATENTSCHRIFT

(45) Veröffentlichungstag der Patentschrift:
28.07.82

(51) Int. Cl.³: **C 01 B 7/05,** C 01 B 21/087

(21) Anmeldenummer: **80104663.2**

(22) Anmeldetag: **07.08.80**

(54) Verfahren zur Herstellung von Ammoniak und Chlorwasserstoff aus Ammoniumchlorid.

(30) Priorität: 06.10.79 DE 2940555

(43) Veröffentlichungstag der Anmeldung:
29.04.81 Patentblatt 81/17

(45) Bekanntmachung des Hinweises auf die Patenterteilung:
28.07.82 Patentblatt 82/30

(84) Benannte Vertragsstaaten:
AT BE FR GB IT LU NL SE

(56) Entgegenhaltungen:
EP-A-0 003 472
DE-A-2 633 640
DE-A-2 834 252
US-A-2 735 749

(73) Patentinhaber: **CHEMISCHE WERKE HÜLS AG,
Postfach 1320, D-4370 Marl 1 (DE)**

(72) Erfinder: **Coenen, Alfred, Dr., Altes Forsthaus,
D-5471 Maria Laach (DE)**
Erfinder: **Kosswig, Kurt, Dr., Hoechster Strasse 10,
D-4370 Marl (DE)**
Erfinder: **Balzer, Dieter, Dr., Griesheimer Strasse 18,
D-4370 Marl (DE)**

## Verfahren zur Herstellung von Ammoniak und Chlorwasserstoff aus Ammoniumchlorid

Bei einer Reihe von technischen Prozessen fällt Ammoniumchlorid als Nebenprodukt an, und zwar meist in Form einer wässrigen Lösung. Dies gilt z.B. für das Ammoniaksoda-Verfahren zur Herstellung von Soda, für die Phosphorsäureherstellung gemäss dem Verfahren der GB-A- 1 541 538 und für alle anderen Verfahren, bei denen Salzsäure mit Ammoniak bzw. Ammoniak mit Salzsäure neutralisiert wird.

Nach dem derzeitigen Stand der Technik wird das Ammoniumchlorid entweder in Substanz gewonnen oder zwecks Rückgewinnung des Ammoniaks mit einer geeigneten alkalisch reagierenden Substanz, wie z.B. Natronlauge oder Kalkmilch behandelt. Nun besteht für Ammoniumchlorid keine mengenmässig ins Gewicht fallende Verwendung – als Dünger besitzt es nur geringe Bedetung –, und die Umsetzung mit z.B. NaOH oder $Ca(OH)_2$ führt zum Verlust sowohl des Alkali- bzw. Erdalkaliions als auch des Chloridions, da die neben Ammoniak entstehenden Chloride in der Regel keiner Verwertung zugeführt, sondern als Ablauge in die Vorfluter gegeben werden, womit sie zu einer erheblichen Umweltbelastung führen.

Aufgabe der Erfindung war es daher, ein Verfahren zu entwickeln, das es gestattet, Ammoniumchlorid in einfacher und wirtschaftlicher Weise so aufzuarbeiten, dass weder das wertvolle Chlor verlorengeht noch die Umwelt mit grossen Mengen von z.B. Natrium- oder Calciumchlorid belastet wird.

Diese Aufgabe wurde durch das in den Ansprüchen beschriebene Verfahren gelöst.

Man geht dabei in der Verfahrensstufe 1 von einer Mischung aus, die im wesentlichen Ammoniumchlorid, ein wasserunlösliches Amin, ein organisches Lösemittel und gegebenenfalls Wasser enthält. Weitere Bestandteile können z.B. gewisse Mengen anderer Salze und aktive sowie inaktive Abbauprodukte der eingesetzten Amine sein.

Als Amine, die unter den Reaktionsbedingungen der Verfahrensstufe 1 eine maximale Wasserlöslichkeit von 5%, vorzugsweise 1%, haben sollen, werden einzeln oder im Gemisch solche verwendet, die sowohl in der Verfahrensstufe 1 Hydrochloride bilden, als auch in der Thermolysestufe (Verfahrensstufe 4) mit ausreichender Geschwindigkeit möglichst vollständig Chlorwasserstoff abspalten, wobei zur Vermeidung von Aminzersetzung keine zu hohe Temperatur (>300°C) erforderlich sein darf. Es zeigte sich, dass diese Voraussetzungen im allgemeinen von tertiären Alkylaminen, tertiären Aryldialkylaminen, sekundären Arylalkylaminen und primären Alkylarylaminen erfüllt werden, die 14 bis 39 Kohlenstoffatome in den stickstoffgebundenen Gruppen besitzen, wobei eine der aliphatischen stickstoffgebundenen Seitenketten mindestens 6 Kohlenstoffatome besitzen muss, und bei den tertiären Alkyl- und Aryldialkylaminen das Stickstoffatom höchstens eine Methylgruppe tragen darf.

Geeignete Amine sind beispielsweise Trihexylamin, Triheptylamin, Trioctylamin, Cyclohexyldiisooctylamin, Tri-2-ethylhexylamin, Di-2-ethylhexylmethylamin, Tri-(3,5,5-trimethylhexyl)-amin, Didecyl-ethylamin, Tri-dodecylamin, Didodecyl-methylamin, Dodecyl-diisopropylamin, Dodecyl-dibutyl-amin, Dodecyldiisobutylamin, Dodecyl-isobutyl-methylamin, Diisopentadecylmethylamin, Diisopentadecyl-ethylamin, Diisopentadecyl-isopropylamin; p-Octyl-anilin, N-Octyl-anilin, N-2-Ethylhexyl-anilin, N-Laurylanilin, N-Isotridecylanilin, N-Isopentadecylanilin, N,N-Di-2-ethylhexylanilin, N,N,-Dihexylanilin, N,N-Dioctylanilin, N,N-Didodecylanilin, N-Dodecyl-N-methyl-anilin, N-Dodecyl-N-ethylanilin, N-Dodecyl-N-hexyl-anilin, N,N-Dihexyl-p-toluidin, N,N-Di-ethylbutyl-p-toluidin und N,N-Diheptyl-p-toluidin.

Als organische Lösungsmittel werden beim erfindungsgemässen Verfahren in der Verfahrensstufe 1 bevorzugt polare Lösemittel eingesetzt, d.h. solche, die durch ein Dipolmoment $\mu > 0$ [vgl. Landolt-Börnstein, Physikalischchemische Tabellen, 5. Auflage, 2. Ergänzungsband (1931), Seiten 74 bis 76] charakterisiert sind. Besonders bevorzugt sind polare organische Lösemittel mit einem Dipolmoment $\mu \gtrsim 1$. In erster Linie sollen sie jedoch die Fähigkeit besitzen, einen positiven Effekt auf die Aminhydrochloridbildung auszuüben. Das heisst, das vorzugsweise polare organische Lösemittel muss so mit dem eingesetzten Amin und der gesamten Verfahrensführung abgestimmt sein, dass in der Verfahrensstufe 1 das Aminhydrochlorid in genügend grosser Ausbeute gebildet wird. Weiterhin ist das (polare) organische Lösemittel so zu wählen, dass es im weiteren Verlauf des Verfahrens, d.h. vor der Spaltung des Aminhydrochlorids auf möglichst einfache und wirtschaftliche Weise aus der oder den organischen Phase(n), z.B. durch Destillation oder Extraktion, soweit wie möglich und/oder erforderlich entfernt werden kann.

Geeignete organische Lösemittel mit einem Siedepunkt zwischen 40 und 250°C aus den verschiedensten Verbindungsklassen (Alkohole, Ester, Ether, Amide, Sulfoxide, Ketone, substituierte Alkane, substituierte Aromaten u.a.) sind beispielsweise primäre, sekundäre und tertiäre Alkohole mit bis zu 12 C-Atomen, wie z.B. Methanol, Ethanol, Propanole, Butanole, Pentanole, 2-Ethylhexanol, Decanol und Cyclohexanol, Butylacetat, Di-n-butylether, (1,4)-Dioxan, Tetrahydrofuran, Dimethylformamid, Dimethylsulfoxid, Aceton, Nitromethan, Nitrobenzol, Benzonitril, Phenol sowie seine alkylkernsubstituierten Derivate und Anisol.

Mit Vorteil können in der Verfahrensstufe 1 auch Mischungen aus einem oder mehreren polaren Lösemitteln mit einem oder mehreren unpolaren Lösemitteln eingesetzt werden. Letztere beeinflussen, wie sich gezeigt hat, die Freisetzung von Ammoniak nur unwesentlich. Ausserdem muss im weiteren Verlauf des Verfahrens, spätestens vor der Durchführung der Verfahrensstufe 4, ohnehin ein geeignetes unpolares oder schwach polares $(0 \leq \mu \leq 1)$ Lösemittel zugegeben werden, so dass es zweckmässig ist, dieses im gesamten Prozess gemeinsam mit dem Amin im Kreis zu führen. Diese Verfahrensweise schliesst auch die Verwendung ein und desselben schwach polaren Lösemittels in den Verfahrensstufen 1 und 4 ein.

Geeignete unpolare Lösemittel aus der Gruppe der aromatischen, araliphatischen und aliphatischen Kohlenwasserstoffe, die im allgemeinen einen Siedepunkt über 140°C, vorzugsweise über 170°C, haben sollen und die unter den gegebenen Reaktionsbedingungen gegen Wasser, Chlorwasserstoff, Amine und Temperaturbelastung inert bzw. weitgehend inert sind, sind beispielsweise Cymole, 1,2,3-Trimethylbenzol, 1,2,4-Trimethylbenzol, 1,2,4-Triethylbenzol, 1,3,5-Triethylbenzol, 1,2,3,4-Tetramethylbenzol, 1,2,3,5-Tetramethylbenzol, 5-tert.-Butyl-m-xylol, 3-Phenylpentan, Dodecylbenzol, Decan, Undecan, Dodecan, Tetradecan, Decalin und Tetralin.

Das Ammoniumchlorid kann sowohl in fester Form als auch in Form einer wässrigen Lösung eingesetzt werden, wobei jedoch beim Einsatz einer wässrigen Lösung der Wassergehalt zweckmässigerweise so niedrig wie möglich zu halten ist. Beide Formen können zusätzlich noch weitere Salze in einer solchen Menge enthalten, dass die Durchführbarkeit und Wirtschaftlichkeit des Verfahrens nicht wesentlich beeinflusst wird. Im allgemeinen beträgt der Ammoniumchloridgehalt in der Verfahrensstufe 1 zu Beginn einer Reaktion bis zu 30, vorzugsweise 20 bis 3 Gewichtsprozent, bezogen auf die Mischung aus 1.1, 1.2 und 1.3.

Das Molverhältnis zwischen Ammoniumchlorid und dem eingesetzten Amin beträgt im allgemeinen mindestens 1:1, vorzugsweise wählt man jedoch einen molaren Aminüberschuss, d.h. ein Molverhältnis 1:n, mit $1<n<3$.

Das gewichtsmässige Verhältnis zwischen dem organischen Lösemittel oder vorzugsweise der Mischung aus polarem und unpolarem organischen Lösemittel und dem Amin kann bei dem vorliegenden Verfahren in den Grenzen von 10:1 bis 0,2:1, vorzugsweise von 5:1 bis 0,5:1, variiert werden. Durch einige orientierende Versuche kann vom Fachmann leicht ermittelt werden, welche Zusammensetzung im speziellen Fall am besten geeignet ist.

Beim Einsatz einer Mischung aus polarem und unpolarem organischem Lösemittel in der Verfahrensstufe 1, ist es jedoch zweckmässig, wenn das unpolare das polare organische Lösemittel gewichtsmengenmässig nicht übersteigt.

Bei der Durchführung des erfindungsgemässen Verfahrens geht man im allgemeinen so vor, dass man die Mischung, die im wesentlichen Ammoniumchlorid, ein wasserunlösliches Amin, ein organisches Lösemittel oder Lösemittelgemisch und gegebenenfalls Wasser enthält, in einer geeigneten Vorrichtung eine Zeit lang bei Temperaturen von 40 bis 250°C, vorzugsweise 50 bis 150°C, erhitzt. Vorteilhafterweise arbeitet man bei einer Sumpftemperatur, die der Siedetemperatur des organischen Lösemittels entspricht. Am Kopf der Vorrichtung, vornehmlich einer Kolonne, werden dann die hauptsächlich aus dem organischen Lösemittel bestehenden Brüden auf übliche Weise kondensiert und dem Sumpf als Rückfluss wieder zugeführt, wobei das in den Brüden enthaltene und vom kondensierten Lösemittel nicht gelöste Ammoniak aus der Kondensationszone abgezogen wird (Verfahrensstufe 2). Der Austrag des Ammoniaks kann durch den Einsatz eines Inertgases noch beschleunigt werden. Als Inertgase kommen z.B. Stickstoff oder andere gasförmige Stoffe in Betracht, die mit Ammoniak unter den herrschenden Reaktionsbedingungen nicht reagieren.

Im allgemeinen wird die Abspaltung, Austreibung und Isolierung des Ammoniaks drucklos durchgeführt. Man kann jedoch auch sowohl bei Unterdruck als auch bei Überdruck arbeiten.

In der Verfahrensstufe 3 wird sodann der Sumpf aus den vorherigen Verfahrensstufen soweit wie möglich und/oder erforderlich von dem oder den polaren Lösemittel(n) und gegebenenfalls von dem vorhandenen Wasser durch z.B. Extraktion und/oder Destillation befreit. So kann es z.B. möglich sein, dass in der Verfahrensstufe 1 ein solches polares organisches Lösemittel allein oder im Gemisch mit einem anderen polaren organischen Lösemittel eingesetzt wurde, das unter den Reaktionsbedingungen der Verfahrensstufe 4 inert bzw. weitgehend inert ist und somit in dem Sumpf verbleiben kann. Ausserdem ist die Entfernung von Wasser nur dann erforderlich, wenn bei der folgenden Aminhydrochloridspaltung ausschliesslich gasförmiger Chlorwasserstoff erhalten werden soll.

Bevor der aus der Verfahrensstufe 3 kommende Rückstand zwecks Abspaltung von Chlorwasserstoff aus dem Aminhydrochlorid erhitzt wird (Verfahrensstufe 4), ist dafür Sorge zu tragen, dass ihm die erforderliche Menge eines geeigneten unpolaren oder schwach polaren Lösemittels zugesetzt wird, sofern diese nicht schon in der Verfahrensstufe 1 oder einer späteren Verfahrensstufe zugegeben wurde. Im allgemeinen werden 5 bis 0,1 Gewichtsteile, vorzugsweise 3 bis 0,2 Gewichtsteile, unpolares oder schwach polares Lösemittel pro Gewichtsteil Amin (Summe aus freiem und als Hydrochlorid gebundenem Amin) eingesetzt.

Bei der Durchführung der thermischen Zerlegung des Aminhydrochlorids kann man z.B. so vorgehen, wie es in der DE-A- 26 33 640 oder in der DE-A- 28 05 933 beschrieben ist. Gemäss dem Verfahren der DE-A- 26 33 640 wird dabei die gegebenenfalls noch freies Amin enthaltende Lösung des Aminhydrochlorids in einem mit einer Kolonne versehenen Behälter zum Sieden gebracht, wobei es erforderlich ist, dass das Lösemittel 20 oder mehr °C niedriger als das Amin siedet. Am Kopf der Kolonne werden die vornehmlich aus dem Lösemittel bestehenden Brüden auf übliche Weise kondensiert und der Kolonne als Rückfluss wieder zugeführt, wobei der in den Brüden enthaltene und vom kondensierten Lösemittel nicht gelöste Chlorwasserstoff zugleich aus der Kondensationszone entweicht. Zur Beschleunigung der Chlorwasserstoff-Bildung kann der abgespaltene Chlorwasserstoff hinter dem Kondensator auf minderen Druck entspannt oder mit Hilfe eins Inertgasstroms ausgetragen werden. Als Inertgase kommen Stickstoff, ferner unter den vorherrschenden Bedingungen gasförmige Stoffe, wie z.B. Ethylen, in Frage, die in einer nachfolgenden Stufe mit Chlorwasserstoff umgesetzt werden sollen.

Nach dem Verfahren der DE-A- 28 05 933 wird der Chlorwasserstoff aus dem Aminhydrochlorid dadurch gewonnen, dass man dieses in dem unpolaren Lösungsmittel unter Durchleiten eines inerten Gasstroms auf 100 bis 250°C erhitzt. Die innerhalb dieses Temperaturbereichs günstige Temperatur ist von der Art und Menge sowohl des Amins wie des unpolaren Lösemittels abhängig. Es ist vorteilhaft, wenn das unpolare Lösemittel bei der Spalttemperatur einen relativ niedrigen Dampfdruck hat, d.h. sein Siedepunkt soll mindestens 20°C über der Spalttemperatur liegen, um den Austrag als Dampf im Inertgasstrom möglichst niedrig zu halten.

Aus dem Chlorwasserstoff-Inertgas-Gemisch kann der Chlorwasserstoff leicht auf bekannte Art, z.B. Adsorption, rein hergestellt werden, jedoch ist dies je nach Verwendungszweck des Chlorwasserstoffs nicht in allen Fällen erforderlich. Verwendet man z.B. als Trägergas Ethylen, dann kann das erhaltene Gasgemisch direkt zur Synthese von Chlorethanen eingesetzt werden.

Eine bevorzugte Ausführungsform des erfindungsgemässen Verfahrens besteht darin, dass man bereits kleine Mengen von Verunreinigungen, wie z.B. primäre und sekundäre Amine, die vor allem durch die thermische Beanspruchung der Mischung aus tertiärem Amin und unpolarem Lösemittel entstehen, aus dem Sumpf der Verfahrensstufe 4 entfernt, bevor man ihn wieder an geeigneter Stelle in das Verfahren einbringt.

Die Abtrennung der unerwünschten Verunreinigungen kann z.B. so erfolgen, wie es in der DE-A- 28 34 252 und DE-A- 29 21 916 beschrieben wird. Im Falle des Verfahrens der DE-A 28 34 252 wird dabei das Gemisch aus Amin, Lösemittel und gegebenenfalls Verunreinigungen ganz oder teilweise über ein Adsorptionsmittel, wie z.B. Aluminiumoxid, Kieselgel oder silanisiertes Kieselgel, geleitet. Bei dem Verfahren der DE-A- 29 21 916 inaktiviert man dagegen die gebildeten primären und sekundären Amine durch Reaktion mit Carbonsäurechloriden.

Das erfindungsgemässe Verfahren kann sowohl diskontinuierlich als auch kontinuierlich durchgeführt werden.

Das bei dem erfindungsgemässen Verfahren gewonnene Ammoniak kann entweder in gasförmiger oder in kondensierter Form, z.B. zur Herstellung von Aminen, der daneben anfallende Chlorwasserstoff z.B. zur Herstellung von Salzsäure oder Chlorkohlenwasserstoffen, wie z.B. Vinylchlorid, verwendet werden.

Alle Prozentangaben – auch in den nachfolgenden Beispielen, die das erfindungsgemässe Verfahren in Teilschritten oder in der Gesamtheit erläutern – sind, sofern nicht anders angegeben, Gewichtsprozente.

Beispiel 1

Ein 0,5 l Rundkolben, versehen mit einer 20 cm Kolonne und Rückflusskühler, wurde mit 90 g (0,33 Mol) Tri-n-hexylamin, 14,5 g (0,27 Mol) Ammoniumchlorid in 37,5 g Wasser und 114 g Isopropanol beschickt und auf Rückfluss erhitzt. Die Badtemperatur betrug 160°C, es stellte sich eine Sumpftemperatur von 82°C ein. Durch einen seitlichen Stutzen wurde in den Kolben 10 l Stickstoff pro Stunde eingeleitet. Der Kolonne und Kühler passierende Stickstoff wurde durch 2 hintereinander geschaltete Waschflaschen geleitet, die 0,5 n Schwefelsäure als Absorptionsflüssigkeit enthielten. Durch Titration mit Lauge konnte jederzeit die Menge des erzeugten Ammoniaks bestimmt werden. Innerhalb von 6 Stunden wurden 0,268 Mol Ammoniak in den Waschflaschen gebunden, dies entspricht einer Ausbeute von 99,4%.

Beispiel 2

114 g (0,323 Mol) Tri-n-octylamin, 14,5 g (0,27 Mol) Ammoniumchlorid in 20 g Wasser und 114 g Isopropanol wurden in eine Apparatur gemäss Beispiel 1 gegeben. Unter Durchleiten von 10 l Stickstoff pro Stunde wurde das Gemisch am Rückfluss erhitzt. Bei einer Badtemperatur von 160°C stellte sich eine Sumpftemperatur von 82°C ein. Nach 5½ Stunden waren 0,255 Mol Ammoniak in den Waschflaschen absorbiert. Dies entspricht einem Umsatz von 94,4%. Zu 226 g Reaktionsaustrag wurden 150 g Dodecan gegeben und das Isopropanol sowie ein Teil des Wassers in einer üblichen Destillationsapparatur abdestilliert. Es verblieb ein Rückstand von 263,5 g mit einem Gehalt an ionischem Chlor von 3,4%.

Zur Spaltung des Aminhydrochlorids in Amin und Chlorwasserstoff wurde eine Apparatur verwendet, die aus einem 0,5-l-Rundkolben, versehen mit einer 20 cm Vigreux-Kolonne, die über einen Wasserabscheider gleichzeitig mit einem Rückflusskühler und einem Tropftrichter verbunden ist, besteht. Durch einen seitlichen Stutzen wurden stündlich 10 l Stickstoff in den Kolben eindosiert. Kolonne und Kühler passierend wurde der Stickstoff durch zwei hintereinander geschaltete Waschflaschen geleitet, die 0,5 n Natronlauge enthielten, um Chlorwasserstoff zu binden. Durch Rücktitration konnte zu jedem Zeitpunkt die Menge des erzeugten Chlorwasserstoffs bestimmt werden.

Zur Spaltung des Aminhydrochlorids wurde ein Teil des Rückstandes (136,5 g) auf die Kolonne getropft, die durch im Kolben befindliches siedendes Dodecan (Sumpftemperatur 220°C, Ölbad 280°C) beheizt wurde. Während einer Eintropfzeit von 141 Minuten wurden 0,12 Mol Chlorwasserstoff abgespalten, die sich durch eine Nachlaufzeit von 17 Minuten auf 0,127 Mol steigern liessen. Das entspricht einer Ausbeute von 97,4%.

Beispiel 3

Ein 1-l-Rundkolben, versehen mit einer 20 cm Kolonne, die über ein y-Stück mit einem Rückflusskühler bzw. einem Tropftrichter verbunden ist, wurde mit 114 g (0,323 Mol) Tri-n-octylamin, 114 g Isopropanol und 100 g Dodecan beschickt und am Rückfluss erhitzt (Badtemperatur 190°C, Sumpftemperatur 84°C). Während einer Zeit von 470 Minuten wurden aus dem Tropftrichter 14,5 g (0,27 Mol) Ammoniumchlorid und 7,8 g Natriumchlorid gelöst in 56 g Wasser auf die Kolonne gegeben. Der freigesetzte Ammoniak wurde in den dem Rückflusskühler nachgeschalteten, mit ½ Schwefelsäure beschickten Waschflaschen aufgefangen. Es wurden 0,170 Mol Ammoniak in der betreffenden Zeit freigesetzt, dies entspricht einer Ausbeute von 63%.

Sodann wurde der Rückstand zur Abtrennung des Isopropanols in eine Destillationsapparatur überführt. es verblieb ein bei Raumtemperatur 3phasiges System, das aufgetrennt wurde. Die untere wässrige Phase enthielt das Natriumchlorid und einen Teil des nichtumgesetzten Ammoniumchlorids, die mittlere Phase bestand überwiegend aus dem Aminhydrochlorid (6,3% Cl-) neben etwa 20% Dodecan, und die obere Phase enthielt freies Amin und Dodecan.

Zur Spaltung des Aminhydrochlorids in Amin und Chlorwasserstoff wurde die im Beispiel 2 beschriebene Apparatur verwendet.

Dabei wurde ein Teil der mittleren Phase (59,4 g, 6,3% Cl-) gelöst in 100 g Dodecan auf die Kolonne getropft, die durch im Kolben befindliches siedendes Dodecan (Sumpftemperatur 220°C, Ölbad 280°C) beheizt wurde. Während einer Eintropfzeit von 268 Minuten wurden 0,107 Mol Chlorwasserstoff abgespalten. Dies entspricht einer Ausbeute von 99,3%.

Beispiele 4 bis 7

In diesen Beispielen wurde die Gewinnung von Ammoniak aus Ammoniumchlorid mit Hilfe verschiedener Amine durchgeführt. Hierzu wurde die Apparatur gemäss Beispiel 1 jeweils mit 0,3 Mol Amin, 114 g Lösemittel und 14,5 g (0,27 Mol) Ammoniumchlorid in 21 g Wasser beschickt und unter Stickstoffeinleitung (10 l/h) am Rückfluss erhitzt. Die Badtemperatur betrug 160 bis 170°C.

Die Ergebnisse zeigt Tabelle 1.

Beispiele 8 bis 16

Diese Beispiele beschreiben die Gewinnung von Ammoniak aus Ammoniumchlorid mit Hilfe von Tri-n-octylamin in Gegenwart von verschiedenen polaren Lösemitteln. Hierbei wurde eine Apparatur gemäss Beispiel 1 jeweils mit 114 g (0,323 Mol) Amin, 114 g Lösemittel und 14,5 g (0,27 Mol) Ammoniumchlorid in Wasser beschickt und unter Einleitung von 10 l/h Stickstoff am Rückfluss erhitzt. Die Ölbadtemperatur betrug jeweils 150 bis 160°C.

Die Ergebnisse zeigt Tabelle 2.

Tabelle 1

| Bsp. | Amin | Lösemittel | freigesetzter Ammoniak (%) nach | | | Sumpftemperatur (°C) |
|---|---|---|---|---|---|---|
| | | | 2 Std. | 4 Std. | 6 Std. | |
| 4 | Tridodecylamin | Isopropanol | 68 | 95 | – | 83 |
| 5 | Triisononylamin | Isopropanol | 54 | 73 | 92 | 83 |
| 6 | Tri-2-ethyl-hexylamin | Phenol | 61 | 75 | – | 110 |
| 7 | N-n-Octylanilin | Dimethylformamid | 15 | 28 | 35 | 123 |

Tabelle 2

| Bsp. | Lösemittel | Wassermenge (g) | freigesetzter Ammoniak (%) nach | | | | | Sumpftemperatur (°C) |
|---|---|---|---|---|---|---|---|---|
| | | | 1 Std. | 2 Std. | 3 Std. | 4 Std. | 5 Std. | |
| 8 | Isopropanol | 75 | 11 | 19 | 25 | 29 | – | 82 |
| 9 | Isobutanol | 75 | 9 | 19 | 26 | 31 | 35 | 93 |
| 10 | Ethanol | 75 | 10 | 15 | 19 | 23 | 27 | 80 |
| 11 | Dioxan | 21 | 11 | 16 | 21 | 26 | – | 93 |
| 12 | Aceton | 21 | 13 | 20 | 24 | 29 | – | 59 |
| 13 | Dimethylformamid | 21 | 44 | 81 | – | – | – | 124 |
| 14 | Nitromethan | 21 | 30 | 48 | 59 | 73 | – | 90 |
| 15 | Dimethylsulfoxid | 21 | 13 | 22 | 33 | 44 | – | 142 |
| 16 | Ethanol/Nitrobenzol 1:1 | 37,5 | 50 | 67 | 75 | 80 | – | 84 |

## Patentansprüche

1. Verfahren zur Herstellung von Ammoniak und Chlorwasserstoff aus Ammoniumchlorid dadurch gekennzeichnet, dass man
1 eine Mischung, die im wesentlichen
1.1 Ammoniumchlorid,
1.2 ein wasserunlösliches Amin und
1.3 ein organisches Lösemittel
enthält, erhitzt, bestehend aus einem polaren Lösemittel und/oder einem unpolaren oder schwach polaren Lösemittel
2 das dabei freiwerdende Ammoniak abzieht,
3 aus dem verbleibenden Sumpf polares Lösemittel und gegebenenfalls vorhandenes Wasser soweit wie möglich und/oder erforderlich entfernt,
4 den ein unpolares und/oder schwach polares Lösemittel enthaltenden Rückstand erhitzt und den Chlorwasserstoff abzieht.

2. Verfahren nach Anspruch 1, dadurch gekennzeichnet, dass man als organisches Lösemittel ein polares einsetzt.

3. Verfahren nach Anspruch 1, dadurch gekennzeichnet, dass man als organisches Lösemittel die Mischung aus einem polaren und unpolaren Lösemittel einsetzt.

4. Verfahren nach den Ansprüchen 1 bis 3, dadurch gekennzeichnet, dass man das Ammoniumchlorid in Form einer wässrigen Lösung einsetzt.

5. Verfahren nach Anspruch 1, dadurch gekennzeichnet, dass man aus dem bei der Verfahrensstufe 4 anfallenden Sumpf die entstandenen Abbauprodukte entfernt bzw. sie darin inaktiviert und das so behandelte Sumpfprodukt der Verfahrensstufe 1 zuführt.

## Claims

1. A process for the manufacture of ammonia and hydrogen chloride from ammonium chloride, characterised in that
(1) a mixture containing essentially
(1.1) ammonium chloride,
(1.2) a water-insoluble amine, and
(1.3) an organic solvent consisting of a polar solvent and/or a non-polar or weakly polar solvent, is heated,
(2) the ammonia which is thereby liberated is withdrawn,
(3) polar solvent and water which may be present are removed as far as possible and/or necessary from the remaining residue,
(4) the residue, with a non-polar or weakly polar solvent, is heated and the hydrogen chloride is withdrawn.

2. A process according to claim 1, characterised in that a polar material is added as organic solvent.

3. A process according to claim 1, characterised in that a mixture of a polar solvent and a non-polar solvent is added as organic solvent.

4. A process according to any of claims 1 to 3, characterised in that the ammonium chloride is added in the form of an aqueous solution.

5. A process according to claim 1, characterised in that the by-products formed are removed from the residue arising in stage (4) or are inactivated therein and the resulting residue is passed to stage (1).

## Revendications

1. Procédé de préparation d'ammoniac et de chlorure d'hydrogène en partant de chlorure d'ammonium, caractérisé par le fait que
1 On chauffe un mélange qui contient essentiellement
1.1 du chlorure d'ammonium,
1.2 une amine insoluble dans l'eau et
1.3 un solvant organique se composant d'un solvant polaire et/ou d'un solvant apolaire ou faiblement polaire,
2 On retire l'ammoniac qui se libère,
3 Du produit de queue qui reste, on élimine, dans la mesure où c'est possible et/ou nécessaire, du solvant polaire et de l'eau éventuellement présente,
4 On chauffe le résidu contenant un solvant apolaire et/ou faiblement polaire et on retire le chlorure d'hydrogène.

2. Procédé selon la revendication 1, caractérisé par le fait que comme solvant organique, on introduit un solvant polaire.

3. Procédé selon la revendication 1, caractérisé par le fait que comme solvant organique, on introduit le mélange d'un solvant polaire et d'un solvant apolaire.

4. Procédé selon les revendications 1 à 3, caractérisé par le fait que l'on introduit le chlorure d'ammonium sous la forme d'une solution aqueuse.

5. Procédé selon la revendication 1, caractérisé par le fait que du produit de queue obtenu à l'étape 4, on élimine les produits de dégradation formés ou qu'on les inactive dans le produit de queue et que l'on amène à l'étape 1 le produit de queue ainsi traité.